# DEMANDE DE BREVET EUROPEEN

(11) **EP 0 765 785 A1**
(43) Date de publication de la demande: **02.04.1997**
(21) Numéro de dépôt: 96115433.3
(22) Date de dépôt: 26.09.1996
(51) Int. Cl.: B60S 1/38

(54) **Essuie-glace muni d'un déflecteur souple fixé sur des griffes de fixation de la raclette d'essuyage**

(30) Priorité: 29.09.1995 FR 9511502
(71) Demandeur: VALEO SYSTEMES D'ESSUYAGE, 78321 La Verrière (FR)
(72) Inventeur: Maubray, Daniel, 92130 Issy Les Moulineaux (FR)
(74) Mandataire: Gamonal, Didier

(57) **Abrégé**

L'invention concerne un essuie-glace de véhicule automobile, du type comportant un balai d'essuie-glace muni d'une structure articulée (18) qui porte, au moyen d'une série de griffes (36) une raclette d'essuyage (20) en matériau souple, et du type comportant un déflecteur aérodynamique souple (40) monté sur le balai, caractérisé en ce que le déflecteur (40) comporte au moins une patte de fixation (42) qui est accrochée sur une griffe (36) de la structure articulée du balai.

## Description

L'invention concerne un essuie-glace muni d'un déflecteur souple fixé sur des griffes de fixation de la raclette d'essuyage.

L'invention concerne plus particulièrement un essuie-glace de véhicule automobile, du type comportant un balai d'essuie-glace muni d'une structure articulée qui est déformable dans un plan longitudinal perpendiculaire à une vitre à essuyer et qui porte, au moyen d'une série de griffes agencées à chacune de ses extrémités terminales, une raclette d'essuyage en matériau souple, et qui plaque la raclette contre la vitre de sorte que la raclette en épouse le galbe, et du type comportant un déflecteur aérodynamique souple monté sur le balai.

Un déflecteur aérodynamique pour balai d'essuie-glace permet, d'une part, de fournir un appui aérodynamique tendant à plaquer le balai contre la vitre lorsque le véhicule se déplace à haute vitesse et, d'autre part, d'éviter que les filets d'air qui s'écoulent le long de la vitre ne perturbent le contact de la raclette contre la vitre, ce qui est nuisible à un bon essuyage de celle-ci.

Pour cela, il est nécessaire que le déflecteur se situe le plus près possible de la raclette et donc le plus près possible de la vitre à essuyer. Or, la raclette d'essuyage est susceptible d'épouser le galbe de la vitre qui peut s'avérer très prononcé, notamment dans le cas d'un pare-brise avant de véhicule automobile, et il est donc apparu intéressant de réaliser le déflecteur aérodynamique en matériau souple afin qu'il puisse suivre les déformations de la raclette et donc le galbe du pare-brise.

Ainsi, il a été proposé un déflecteur souple monté sur la structure articulée du balai d'essuie-glace et comportant des doigts de commande, en appui sur un dos supérieur de la raclette, susceptibles de transmettre au déflecteur les déformations de la raclette.

Toutefois, ce dispositif s'avère fort complexe car il nécessite par ailleurs des points d'attache du déflecteur sur la structure articulée qui autorisent un coulissement vertical du déflecteur par rapport à la structure articulée, et les doigts de commande des déformations du déflecteur, qui sont en appui unidirectionnel sur la raclette, ne peuvent pas provoquer le retour du déflecteur vers sa position de repos.

Il faut alors compter sur l'élasticité du matériau dans lequel est réalisé le déflecteur pour que celui-ci revienne dans sa forme initiale, ce qui implique qu'il exerce lui-même à tout moment un effort parasite sur la raclette tendant à augmenter sa pression de contact contre la vitre au centre du balai, au détriment des extrémités.

Aussi, dans le but d'apporter une solution à ces problèmes, l'invention propose un essuie-glace du type vu précédemment, caractérisé en ce que le déflecteur comporte au moins une patte de fixation qui est accrochée sur une griffe de la structure articulée du balai.

Selon d'autres caractéristiques de l'invention :
- la patte de fixation est emboîtée élastiquement sur la griffe de manière à être immobilisée en translation par rapport à la griffe ;
- la griffe comporte un dos transversal en appui contre une face supérieure d'un talon de la raclette d'essuyage, la griffe comporte une plaque supérieure, paralléle au dos transversal auquel elle est reliée par un pied central, la patte de fixation comporte une lame qui est d'épaisseur sensiblement égale à l'écartement entre le dos et de la plaque transversale de la griffe et qui comporte un orifice central, une fente de largeur réduite relie l'orifice à un bord transversal de la lame, et la lame est insérée longitudinalement entre le dos et la plaque transversale de la griffe, le pied central de la griffe étant reçu dans l'orifice central de la lame, au travers de la fente de largeur réduite, de sorte que la patte de fixation est immobilisée sur la griffe ;
- la lame de la patte de fixation est reliée à une face latérale du déflecteur souple par une traverse ;
- la patte de fixation est réalisée venue de matière avec le déflecteur souple ;
- la patte de fixation est réalisée en matériau plastique rigide, et en ce que le déflecteur souple est surmoulé sur la patte ;
- le déflecteur souple comporte plusieurs pattes de fixation, chacune accrochée sur une griffe du balai d'essuie-glace ;
- le déflecteur souple comporte une série de pattes de fixation en nombre égal à celui des griffes du balai d'essuie-glace.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un essuie-glace conforme aux enseignements de l'invention ;
- la figure 2 est un détail agrandi de la figure 1 montrant plus particulièrement l'accrochage d'une patte de fixation sur une griffe d'un essuie-glace selon l'invention ;
- la figure 3 est une vue en section partielle suivant un plan transversal de l'accrochage d'une patte de fixation sur une griffe selon l'invention ;
- la figure 4 est une vue partielle en section selon la ligne 4-4 de la figure 3.

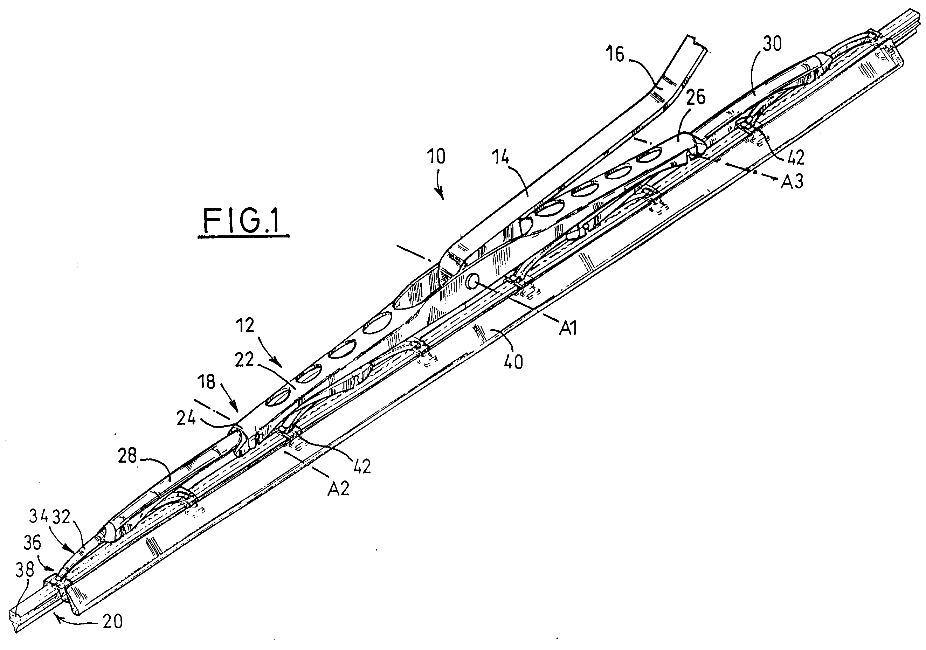

On a représenté sur la figure 1 un essuie-glace 10 de véhicule automobile comportant un balai d'essuie-glace 12 qui est monté articulé, autour d'un axe transversal A1, à l'extrémité longitudinale avant 14 d'un bras 16 qui entraîne l'essuie-glace 10 en balayage alterné.

De manière connue, le balai d'essuie-glace 12 comporte une structure articulée 18 qui s'étend dans un plan longitudinal sensiblement perpendiculaire au plan général d'une vitre à essuyer (non représentée) et qui porte une raclette d'essuyage 20 qu'elle est destinée à plaquer contre la vitre.

A cet effet, la structure articulée 18 comporte un étrier principal 22 qui est monté articulé sur l'extrémité avant 14 du bras 16 et à chacune des extrémités longitudinales 24, 26 duquel sont articulés, autour d'axes transversaux respectifs A2, A3, des étriers secondaires 28, 30 qui portent à leur tour, à chacune de leurs extrémités longitudinales, des palonniers articulés 32.

Les palonniers articulés 32 comportent à chacune de leurs deux extrémités longitudinales 34 des griffes 36 d'accrochage de la raclette 20 qui coopèrent avec un talon supérieur 38 de la raclette 20.

Le balai d'essuie-glace 12 ainsi représenté est un balai de grande longueur qui comporte de ce fait un étrier principal 22, deux étriers secondaires 28, 30 et quatre palonniers 32, et comporte ainsi huit griffes d'accrochage 36 de la raclette 20. Il va de soi que, pour un balai d'essuie-glace 12 de longueur réduite, il est possible de diminuer le nombre de griffes d'accrochage 36 en supprimant, par exemple, un palonnier 32 ou même l'un des étriers secondaires 28, 30.

Le balai d'essuie-glace 12 selon l'invention est muni d'un déflecteur aérodynamique souple 40 qui s'étend longitudinalement sur un côté de la raclette 20.

Conformément aux enseignements de l'invention, le déflecteur souple 40 comporte des pattes de fixation 42 dont chacune est accrochée sur une griffe 36 de la structure articulée 18 du balai 12.

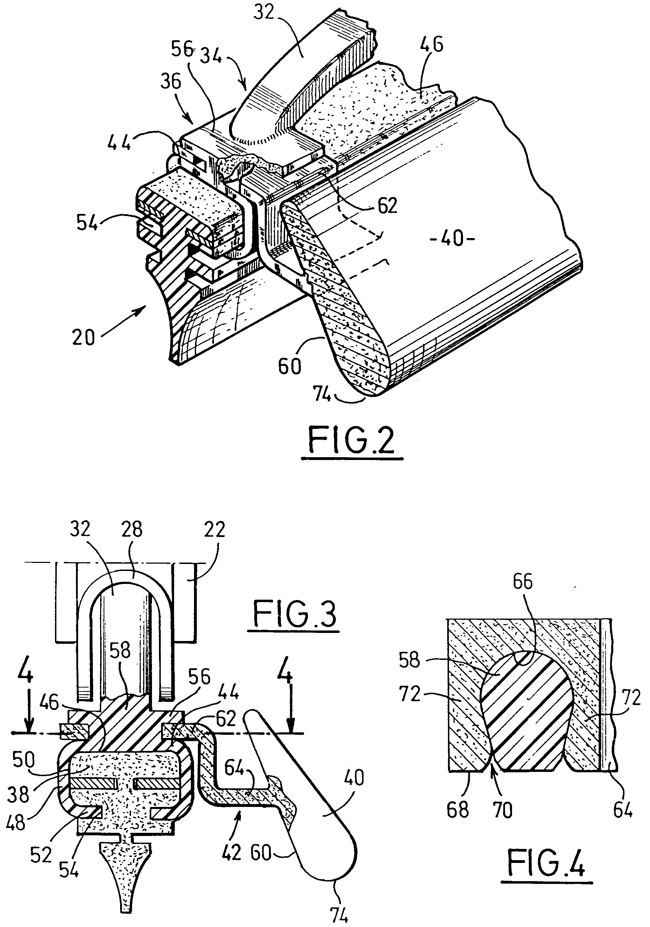

On a représenté de manière plus précise sur les figures 2 à 4 l'assemblage d'une patte de fixation 42 du déflecteur 40 sur une griffe 36 du balai 12.

Comme on peut le voir plus particulièrement sur la figure 3, chaque griffe 36 de la structure articulée 18 comporte, selon une conception connue, un dos supérieur transversal 44 qui est en appui contre une face supérieure 46 du talon 38 de la raclette 20. Deux jambes latérales 48 s'étendent depuis le dos supérieur 44, en direction de la vitre à essuyer, le long de faces latérales 50 du talon 38 de la raclette 20, et possèdent chacune une extrémité inférieure recourbée 52 qui est reçue dans une gorge longitudinale 54 prévue à cet effet dans chacune des faces latérales 50 du talon 38.

Il est prévu par ailleurs des moyens (non représentés) d'arrêt longitudinal de la raclette 20 par rapport aux griffes 36 qui complètent l'accrochage de la raclette 20 sur la structure articulée 18.

Les griffes 36 selon l'invention possèdent par ailleurs une plaque transversale supérieure 56, qui est aménagée parallèlement au-dessus du dos transversal 44 de la griffe 36, et qui est reliée par un pied central 58 au dos transversal 44.

Les pattes de fixation 42 du déflecteur aérodynamique souple 40 s'étendent depuis une face latérale 60 de celui-ci tournée en direction du balai d'essuie-glace 12 et de la raclette 20.

Les pattes de fixation 42 comportent une lame de fixation 62 qui est destinée à coopérer avec une griffe 36, et une traverse de liaison 64 qui relie la lame de fixation 62 au déflecteur 40. La lame de fixation 62 est destinée à être insérée longitudinalement entre le dos supérieur 44 et la plaque supérieure 56 de la griffe 36 et elle comporte à cet effet un orifice central 66 qui débouche dans un bord transversal avant 68 par une fente 70 de largeur réduite qui délimite dans la lame 62, de chaque coté de l'orifice central 66, deux bras longitudinaux 72.

Comme on peut le voir sur la figure 4, l'orifice central 66 de la lame 62 est de profil complémentaire de celui du pied central 58 de la griffe 36.

De la sorte, la lame 62 est susceptible d'être engagée longitudinalement d'arrière en avant, c'est-à-dire de la droite vers la gauche en considérant la figure 2, entre le dos supérieur 44 et la plaque supérieure 56 de la griffe 36, autour du pied central 58. La fente 70 étant de largeur transversale inférieure à celle du pied central 58, elle est chanfreinée et le pied central 58 comporte une face arrière de forme telle que, lorsque la lame de fixation 62 est engagée par son bord transversal avant 68, le pied central 58 provoque l'écartement élastique des deux bras 72 de la lame 62.

Lorsque le pied 58 est engagé au fond de l'orifice 66, les deux bras 72 reprennent élastiquement leur forme initiale et verrouillent ainsi la patte de fixation 42 sur le pied 58 empêchant notamment toute rotation de la lame par rapport à la griffe autour de l'axe général du pied.

Par ailleurs, la lame 62 est d'une épaisseur sensiblement égale à l'écartement du dos supérieur 44 et de la plaque supérieure 56 de la griffe 36 de sorte que la patte de fixation 52 se retrouve immobilisée par rapport à la griffe 36.

Ainsi, le déflecteur 40, qui est ici muni d'autant de pattes de fixation 42 qu'il y a de griffes 36 sur la structure articulée 18, est maintenu fermement en place sur le balai d'essuyage.

De plus, les pattes de fixation 42 assurent non seulement son accrochage sur le balai mais elles commandent également sa déformation qui est ainsi la même que celle de la raclette 16 qui épouse le galbe de la vitre à essuyer.

Ainsi, du fait de la grande précision de cette déformation, il est possible de positionner le bord inférieur 74 du déflecteur aérodynamique 40 très près de la surface vitrée, de façon à protéger de manière très efficace la lame active de la raclette 20 et ainsi de favoriser un essuyage parfait de cette surface vitrée.

De préférence, les pattes de fixation 42 sont réalisées venues de matière avec le déflecteur 40.

Selon une variante de réalisation, on peut prévoir que les pattes de fixation 42 sont réalisées en un matériau rigide et le déflecteur aérodynamique 40 est surmoulé sur les pattes 42 et il peut alors être réalisé avec un matériau de très faible densité.

## Revendications

1. Essuie-glace de véhicule automobile, du type comportant un balai d'essuie-glace (12) muni d'une structure articulée (18) qui est déformable dans un plan longitudinal perpendiculaire à une vitre à essuyer, qui porte, au moyen d'une série de griffes (36) agencées à chacune de ses extrémités terminales (34), une raclette d'essuyage (20) en matériau souple, et qui plaque la raclette (20) contre la vitre de sorte que la raclette (20) en épouse le galbe, et du type comportant un déflecteur aérodynamique souple (40) monté sur le balai (12), caractérisé en ce que le déflecteur (40) comporte au moins une patte de fixation (42) qui est accrochée sur une griffe (36) de la structure articulée (18) du balai (12).

2. Essuie-glace selon la revendication 1, caractérisé en ce que la patte de fixation (42) est emboîtée élastiquement sur la griffe (36) de manière à être immobilisée en translation par rapport à la griffe (36).

3. Essuie-glace selon la revendication 1 ou 2, caractérisé en ce que la griffe (36) comporte un dos transversal (44) en appui contre une face supérieure (46) d'un talon (38) de la raclette d'essuyage (20), en ce que la griffe (36) comporte une plaque supérieure (56), parallèle au dos transversal (44) auquel elle est reliée par un pied central (58), en ce que la patte de fixation (42) comporte une lame (62) qui est d'épaisseur sensiblement égale à l'écartement entre le dos (44) et de la plaque transversale (56) de la griffe (36) et qui comporte un orifice central (66), en ce qu'une fente (70) de largeur réduite relie l'orifice (66) à un bord transversal (68) de la lame (62), et en ce que la lame (62) est insérée longitudinalement entre le dos (44) et la plaque transversale (56) de la griffe (36), le pied central (58) de la griffe (36) étant reçu dans l'orifice central (66) de la lame (62), au travers de la fente (70) de largeur réduite, de sorte que la patte de fixation (42) est immobilisée sur la griffe (36).

4. Essuie-glace selon l'une des revendications 1 à 3, caractérisé en ce que la lame (62) de la patte de fixation (42) est reliée à une face latérale (60) du déflecteur souple (40) par une traverse (44).

5. Essuie-glace selon l'une quelconque des revendications précédentes, caractérisé en ce que la patte de fixation (42) est réalisée venue de matière avec le déflecteur souple (40).

6. Essuie-glace selon l'une quelconque des revendications 1 à 4, caractérisé en ce que la patte de fixation (42) est réalisée en matériau plastique rigide, et en ce que le déflecteur souple (40) est surmoulé sur la patte (42).

7. Essuie-glace selon l'une quelconque des revendications précédentes, caractérisé en ce que le déflecteur souple (40) comporte plusieurs pattes de fixation (42), chacune accrochée sur une griffe (36) du balai d'essuie-glace (12).

8. Essuie-glace selon la revendication 7, caractérisé en ce que le déflecteur souple (40) comporte une série de pattes de fixation (42) en nombre égal à celui des griffes (36) du balai d'essuie-glace (12).
